# EUROPEAN PATENT SPECIFICATION

(11) **EP 3 000 298 B1**
(45) Date of publication and mention of the grant of the patent: **08.05.2019**
(21) Application number: 15468008.6
(22) Date of filing: 07.09.2015
(51) Int. Cl.: A01B 73/04, A01D 75/20, A01D 78/10

(54) **ROTARY TEDDER**
KREISELHEUWENDER
TEDDER ROTATIF

(30) Priority: 05.09.2014 SI 201400305
(43) Date of publication of application: 30.03.2016
(73) Proprietor: SIP Strojna Industrija d.d., 3311 Sempeter v Sav.dol. (SI)
(72) Inventor: Bogataj, Sebastjan, 3303 Gomilsko (SI); Jelen, Andrej, 3320 Velenje (SI)
(74) Representative: Flak, Antonija

(56) References cited:
- EP-A1- 2 591 653
- EP-A2- 2 702 847
- US-A- 3 797 580
- US-A- 6 092 609

## Description

The subject of the invention is a rotary tedder for spreading feed, which is mounted or trailed. The invention relates to a lifting device in a working position, in a non-working position and for folding in a transport position.

The technical problem, which the invention solves, is getting the rotary tedder of larger working widths along with the tractor over obstacles in the non-working position in reverse by using a simple lift system. The main emphasis should be put on the problem of placing the outer rotor exactly on the edge of the field.

Already outlined is the solution in DE 199 20 755 featuring a lift mechanism, which is connected between the frame of the rotary tedder and the scissor lever on the bracket. The hydraulic cylinder is connected to the folding segment to the bracket before and after the segment. A valve is fitted before the hydraulic cylinder. The valve is opened and closed mechanically or electronically by sensing movement of the scissor lever. In the working position the valve is open and allows the hydraulic cylinder to move past the folding segment. When the lifting mechanism is engaged to lift the tedder the changed position of the scissor lever closes the valve on the hydraulic cylinder and prevents movement of the folding segment while the support wheel in front of the folding segment is still in contact with the surface. For the lift of these support wheels, the brackets on the outer side of the scissor lever must first be folded by approximately 180 °C.

A drawback of this solution is the fact that it does not allow exact positioning of the outer rotor on the edge of the field. Maintenance of the mechanical or electronic manipulation with the valve via the movement of the scissor lever is complex.

The invention, as defined in independent claim 1, encompasses a lift mechanism, which in the non-working position allows the fully extended tedder with all support wheels off the ground. This allows driving in reverse and driving over obstacles.

Exact positioning of the outer rotor is possible due to the fact that the rotor is lifted off the ground. With driving in reverse exact positioning of the rotor is possible. In the working position, the lift mechanism of the rotary tedder allows contact of the rotor with the ground and with this adjustment of the rotors with spring tines for better quality of tedding. The lift mechanism of the tedder allows the tedder to be folded into the transport position.

The rotary tedder according to the invention encompasses the lift mechanism fitted between the frame of the rotary tedder and the scissor lever. The invention comprises a one-way cylinder attached to a two-way cylinder wherein the one-way cylinder is attached to the frame of the rotary tedder and the two-way cylinder to the pivoting segment and scissor lever.

The pivotably mounted pivoting segment behind the folding segment is extended to a rest over the folding segment, wherein at certain conditions the pivoting segment rests on the bracket in front of the folding segment.

The invention will be outlined in the design example and the figures depicting:
- Fig. 1: Rotary tedder in the working position
- Fig. 1a: Lift mechanism of rotary tedder in working position
- Fig. 1b: a pivoting segment of rotary tedder in working position
- Fig. 2: Rotary tedder in the non-working position
- Fig. 2a: a pivoting segment of rotary tedder in non-working position
- Fig. 3: Rotary tedder in the transport position

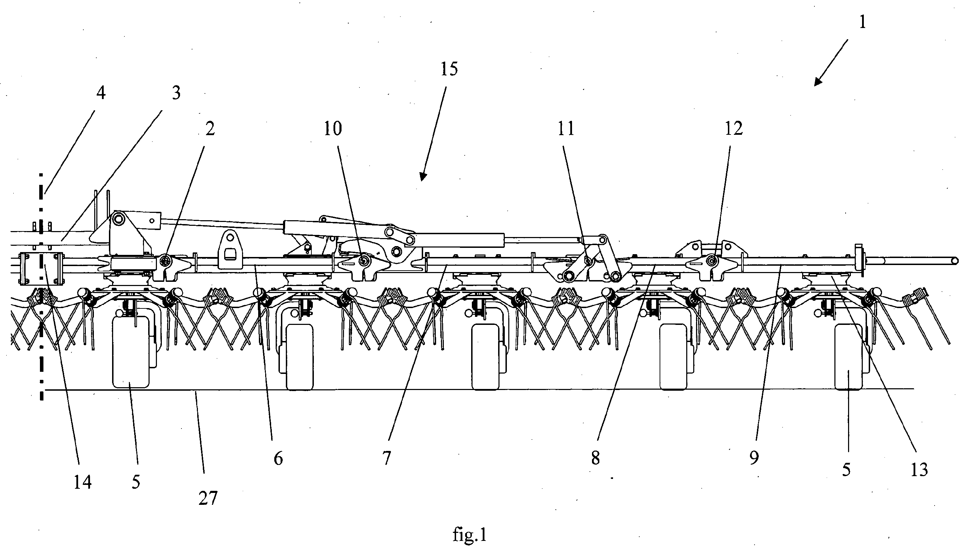

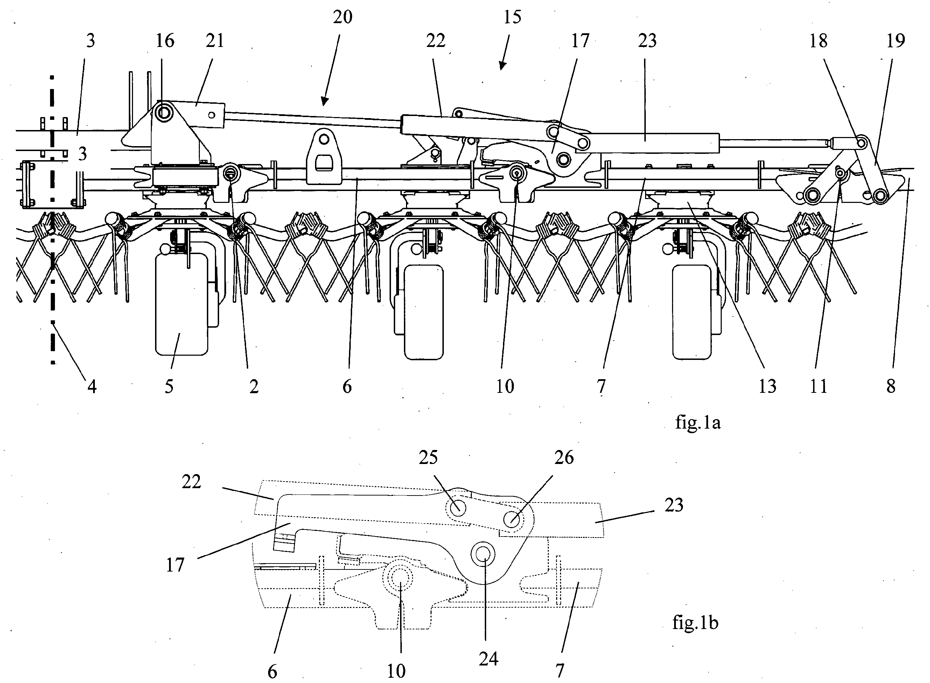

Figure 1 shows one symmetrical side in relation to the symmetrical line 4 of the rotary tedder in the working position. The side segment 1 is pivotably attached to the main frame 3 in the folding joint 2. The main frame 3 and the side segment 1 are supported by support wheels 5. The side segment 1 is assembled of a plurality of side brackets 6, 7, 8, 9, which are pivotably attached to each other in a plurality of folding joints 10, 11, 12. In each separate side segment there is a rotor 13 with spring tines. All rotors 13 are driven by the drive 14 which leads from the tractor via the PTO shaft (not shown in the figures) to the drive on the main frame 3 and through the plurality of side brackets 6, 7, 8, 9.

The lift mechanism 15 is above the first, second and third side brackets 6, 7, 8.

Figure 1a shows the lift mechanism 15 of the rotary tedder in the working position. The lift mechanism 15 comprises a hydraulic segment 20 comprising a one-way cylinder 21, which is via the piston pivotably attached at a first pivot joint 16 on the main frame 3 and is connected to the two-way cylinder 22, which is via the piston pivotably attached to the pivoting segment 17 and the two-way cylinder 23 is pivotably attached to the pivoting segment 17 and the second pivoting joint 18 of the scissor lever 19 on the side brackets 7, 8.

The pivoting segment 17 in figure 1b can rotate in a third joint 24 on the second side bracket 7. The before stated piston on the two-way cylinder 22 is pivotably attached in a first joint 25 and the piston on the two-way cylinder 23 is pivotably attached in a second joint 26. The pivoting segment 17 is extended to a rest over the folding joint 10 where at certain conditions the pivoting segment rests on the first side bracket 6.

The lift mechanism 15 in the working position allows each of the support wheels 5 contact with the changing terrain 27 and thus allowing adaptation of rotors 13 with spring tines in the plurality of folding joints 10, 11, 12 and folding joint 2 to terrain. In this case only the one-way cylinder 21 is switched into the floating function. The two-way cylinders 22, 23 are completely extended and not in function. The pivoting segment 17 rotates freely in the third joint 24.

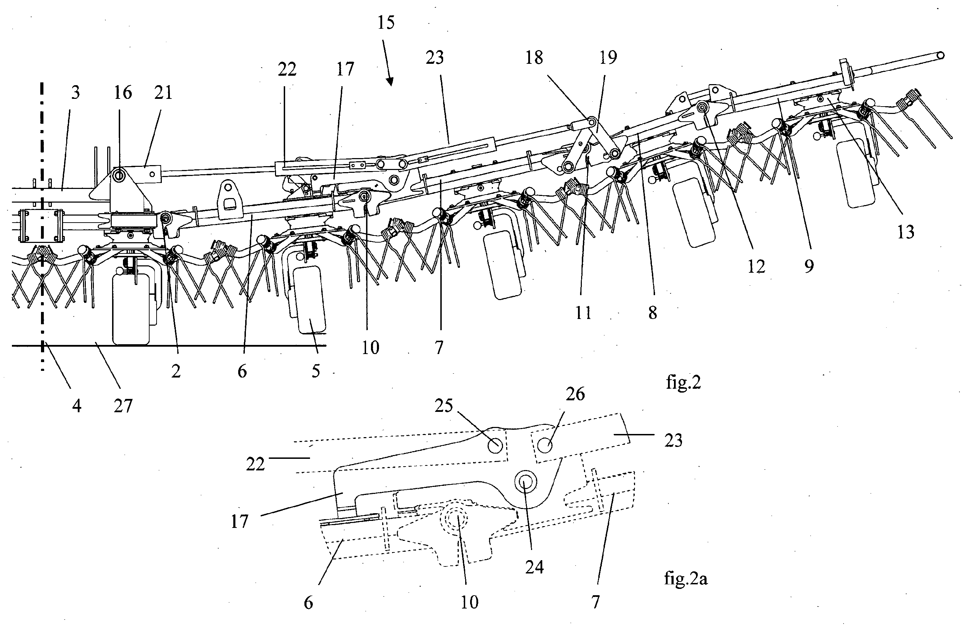

Figure 2 shows the rotary tedder in the non-working position caused by the lifting mechanism, which lifts the side segment 1 so the support wheels 5 of the first side bracket 6 are lifted off the surface 27 and also the support wheels 5 of the second, third and fourth side brackets 7,8, 9. All the wheels 5 of the side segment 1 are lifted high enough to allow unobstructed passage over the obstacles and driving in reverse with the rotors 13 rotating.

Also, in this case only the one-way cylinder 21 is triggered from the floating function to the lift function to lift the side segment 1. Both two-way cylinders 22, 23 are fully extended and not in function. By shortening the lifting mechanism 15 between the first and second pivoting joint 16 and 18 the side segment 1 starts to rise in the pivoting segment 17 on the second side bracket 7 in the first folding joint 10. When the rest the pivoting segment 17 rests on the first side bracket 6, the first side bracket 6 starts to fold in the folding joint 2 until the one-way cylinder 21 is fully compressed.

The transition from the non-working to the working position is triggered by the one-way cylinder 21 by lowering the side segment 1 so all support wheels are in contact with the surface 27. Both two-way cylinders 22, 23 remain fully extended and not in function. The one-way cylinder 21 is switched in to the floating function.

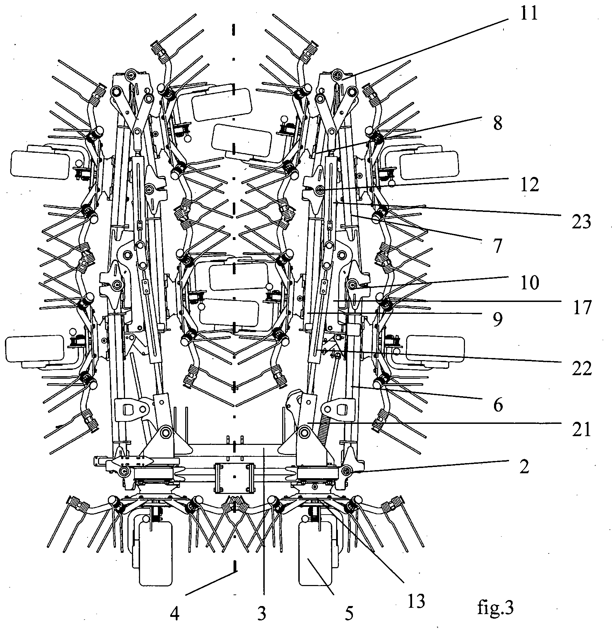

Folding of the rotary tedder in to the transport position figure 3 can be done from the non-working position or from the working position.

From the non-working position, the lift mechanics 15 works so that the third and fourth brackets 8 and 9 first fold in the second folding joint 11 by approximately 180° and are then followed by the first and second brackets 6 and 7 in the folding joint 2 by approximately 90°.

In the working position the lift mechanism 15 works so that the third and fourth brackets 8 and 9 first fold in the second folding joint 11 by approximately 180° and are then followed by the first and second brackets 6 and 7 in the folding joint 2, which reach approximately 90°. For complete folding, the lift of the one-way cylinder 21 must be triggered.

Folding into the transport position from the non-working position is triggered by the two-way cylinders 22, 23, which are hydraulically connected. Firstly, the second two-way cylinder 23 is fully compressed, which is followed by the first two-way cylinder 22 which is also fully compressed. The one-way cylinder 21 is fully compressed and not in function. It is via an extended rest by the folding joint 10 of the pivoting segment 17 in constant contact with the first bracket 6.

Folding into the transport position from the working position is triggered by the two-way cylinders 22, 23, which are hydraulically connected. First, the second two-way cylinder 23 is fully compressed, then the pivoting segment 17 rotates via the folding joint 10 to come in contact with bracket 6, which is then followed by the triggering of the first two-way cylinder 22 into the compressed position. For complete folding the lifting of the one-way cylinder is triggered.

## Claims

1. A rotary tedder having a side segment (1) pivotally attached in a first folding joint (2) to a main frame (3), wherein the main frame (3) and the side segment (1) are supported by support wheels (5) and the side segment (1) is constructed of a plurality of side brackets (6, 7, 8 , 9), which are in a plurality of further folding joints (10, 11, 12) attached to each other,
wherein a first side bracket (6) is pivotally attached to the main frame (3) in the first folding joint (2), a second side bracket (7) is pivotally attached to the first side bracket (6) in a second folding joint (10) and a third side bracket (8) is pivotally attached to the second side bracket (7) in a third folding joint (11),
wherein on each side bracket there is a rotor (13) with spring tines and all rotors (13) are driven by a drive (14), which leads from a tractor via a PTO shaft to a drive on the main frame (3) through the plurality of side brackets (6, 7, 8, 9) and wherein between the main frame (3) and a scissor lever (19) a lift mechanism (15) is fitted,
**characterized in that** the lift mechanism (15) is comprised of a hydraulic segment (20) comprised of a one-way cylinder (21), which is via a piston pivotally attached at a first pivoting joint (16) on the main frame (3) and is connected to a first two-way cylinder (22) which is via a piston pivotally attached to a pivoting segment (17),
wherein the pivoting segment (17) has a first joint (25), a second joint (26) and a third joint (24) and can rotate in the third joint (24) on the second side bracket (7) and a second two-way cylinder (23) is pivotally attached to the pivoting segment (17) and to a the second pivoting joint (18) of the scissor lever (19), which is mounted on the second and third side brackets (7, 8).

2. The rotary tedder according to claim 1, **characterized in that** the piston of the first two-way cylinder (22) is pivotably attached in the first joint (25) and the piston on the second two-way cylinder (23) is pivotally attached in the second joint (26).

3. The rotary tedder according to any of the preceding claims, **characterized in that** the pivoting segment (17) is extended to an extended resting portion over the second folding joint (10) where at certain conditions the pivoting segment rests on the first side bracket (6).

4. The rotary tedder according to any of the preceding claims, **characterized in that** the lift mechanism (15) in the working position allows each of the support wheels (5) contact with the changing terrain (27) and thus allowing adaptation of rotors (13) with spring tines in the plurality of folding joints (10, 11, 12) and the first folding joint (2) and in this case only the one-way cylinder (21) is switched in to the floating function, the two-way cylinders (22, 23) are completely extended and not in function and the pivoting segment (17) rotates freely in the third joint (24).

5. The rotary tedder according to any of the preceding claims, **characterized in that** the lift mechanism (15) enables lift of the side segment (1) from the working position in to the non-working position so that the support wheel (5) of the first side bracket (6) and the support wheels (5) of the second, third and fourth brackets (7, 8, 9) are lifted off the surface (27) and that in this case the one-way cylinder (21) is switched from the floating position to the lift position and the two-way cylinders (22, 23) are completely extended and not in function.

6. The rotary tedder according to claim 5, **characterized in that** with the shortening the lift mechanism (15) between the pivoting joints (16, 18) starts to lift the side segment (1) by lifting the pivoting segment (17) of the second bracket (7) in the second folding joint (10) and when the extended resting portion of the pivoting segment (17) rests on the first side bracket (6), which allows lifting of the first side bracket (6) in the first folding joint (2) until the one-way cylinder (21) is fully compressed.

7. The rotary tedder according to any of the preceding claims, **characterized in that** the lift mechanism (15) for folding into transport position from the non-working position allows lifting of the side segment (1) in third and fourth brackets (8, 9) in the third folding joint (11) by approximately 180°, which is followed by the side segment (1) with the first and second brackets (6, 7) in the first folding joint (2) by approximately 90°.

8. The rotary tedder according to claims 3 and 7, **characterized in that** only the two-way cylinders (22, 23) are triggered due to a hydraulic connection and **in that**:
- first the second two-way cylinder (23) is arranged to be fully compressed;
- thereafter the first two-way cylinder (22) is arranged to be fully compressed, once the second two-way cylinder (23) is fully compressed;
- and thereafter the one-way cylinder (21) is arranged to be fully compressed and stopped, while the extended resting portion of the pivoting segment (17) is in constant contact with the first side bracket (6) across the pivoting joint (10).

## Patentansprüche

1. Drehbarer Heuwender mit einem Seitenabschnitt (1), der in einem ersten Faltgelenk (2) schwenkbar mit einem Hauptrahmen (3) verbunden ist, wobei der Hauptrahmen (3) und der Seitenabschnitt (1) durch Stützräder (5) abgestützt werden und der Seitenabschnitt (1), der aus einer Vielzahl von Seitenbügeln (6, 7, 8, 9), die in einer Vielzahl von weiteren Faltgelenken (10, 11, 12) miteinander verbunden sind, besteht, wobei ein erster Seitenbügel (6) schwenkbar am Hauptrahmen (3) im ersten Faltgelenk (2) befestigt ist, ein zweiter Seitenbügel (7) schwenkbar an dem ersten Seitenbügel (6) im zweiten Faltgelenk (10) befestigt ist, und ein dritter Seitenbügel (8) schwenkbar an dem zweiten Seitenbügel (7) im dritten Faltgelenk (11) befestigt ist, wobei ein Seitenbügel jeweils einen Rotor (13) mit Federzinken aufweist und alle Rotoren (13) von einem Antrieb (14) angetrieben werden, der von einer Stachelwalze über eine Zapfwelle zu einem Antrieb am Hauptrahmen (3) durch eine Vielzahl von Seitenbügeln (6, 7, 8, 9) führt und wobei zwischen dem Hauptrahmen (3) und einem Scherenhebel (19) ein Hubmechanismus (15) angebracht ist,
**dadurch gekennzeichnet, dass** der Hubmechanismus (15) aus einem, aus einem Einwegzylinder (21) gebildeten Hydrauliksegment (20) besteht, der über einen Kolben schwenkbar am ersten Schwenkgelenk (16) am Hauptrahmen (3) befestigt ist, und mit einem ersten, über einen Kolben an einem Schwenksegment (17) schwenkbar befestigten Zweiwegezylinder (22) verbunden ist,
wobei das Schwenksegment (17) ein erstes Gelenk (25), ein zweites Gelenk (26) und ein drittes Gelenk (24) aufweist und in dem dritten Gelenk (24) am zweiten Seitenbügel (7) drehbar ist, und ein zweiter Zweiwegezylinder (23) an dem Schwenksegment (17) und an einem zweiten Schwenkgelenk (18) des Scherenhebels (19) schwenkbar befestigt ist, der an dem zweiten und dritten Seitenbügel (7, 8) gelagert ist.

2. Drehbarer Heuwender nach Anspruch 1, **dadurch gekennzeichnet, dass** der Kolben des ersten Zweiwegezylinders (22) schwenkbar im ersten Gelenk (25) und der Kolben am zweiten Zweiwegezylinder (23) schwenkbar im zweiten Gelenk (26) befestigt ist.

3. Drehbarer Heuwender nach einem der vorhergehenden Ansprüche, **dadurch gekennzeichnet, dass** das Schwenksegment (17) über das zweite Faltgelenk (10) zu einem erweiterten Ruheabschnitt erweitert ist, wobei das Schwenksegment, unter bestimmten Bedingungen, auf dem ersten Seitenbügel (6) aufliegt.

4. Drehbarer Heuwender nach einem der vorhergehenden Ansprüche, **dadurch gekennzeichnet, dass** der Hubmechanismus (15) in der Arbeitsposition ermöglicht, dass jedes der Stützräder (5) mit dem sich ändernden Gelände (27) Bodenkontakt hat und so eine Anpassung der Rotoren (13) mit Federzinken in der Vielzahl von Faltgelenken (10, 11, 12) und dem ersten Faltgelenk (2) ermöglicht und in diesem Fall nur der Einwegzylinder (21) in die Schwebefunktion geschaltet wird, wobei die Zweiwegezylinder (22, 23) vollständig ausgefahren sind und nicht funktionieren und sich das Schwenksegment (17) im dritten Gelenk (24) frei dreht.

5. Drehbarer Heuwender nach einem der vorhergehenden Ansprüche, **dadurch gekennzeichnet, dass** der Hubmechanismus (15) einen Hub des Seitenabschnitts (1) aus der Arbeitsstellung in die Nichtarbeitsstellung ermöglicht, so dass das Stützrad (5) des ersten Seitenbügels (6) und die Stützräder (5) der zweiten, dritten und vierten Bügel (7, 8, 9) von der Oberfläche (27) abgehoben sind und dass in diesem Fall der Einwegzylinder (21) von der Schwebestellung in die Hubstellung geschaltet wird und die Zweiwegezylinder (22, 23) vollständig ausgefahren und außer Funktion sind.

6. Drehbarer Heuwender nach Anspruch 5, **dadurch gekennzeichnet, dass** sich durch die Verkürzung des Hubmechanismus (15) zwischen den Schwenkgelenken (16, 18) der Seitenabschnitt (1) anzuheben beginnt, indem der Schwenkabschnitt (17) des zweiten Seitenbügels (7) in dem zweiten Faltgelenk (10) angehoben wird und wenn der verlängerte Ruheabschnitt des Schwenksegments (17) auf dem ersten Seitenbügel (6) aufliegt, ein Anheben des ersten Seitenbügels (6) in dem ersten Faltgelenk (2) möglich wird bis der Einwegzylinder (21) vollständig zusammengedrückt ist.

7. Drehbarer Heuwender nach einem der vorhergehenden Ansprüche, **dadurch gekennzeichnet, dass** der Hubmechanismus (15) zum Einklappen in eine Transportposition aus der Nichtarbeitsposition das Anheben des Seitenabschnitts (1) in der dritten und vierten Konsole (8, 9) im dritten Faltgelenk (11) um etwa 180° ermöglicht, gefolgt von dem Seitenabschnitt (1) mit der ersten und zweiten Konsole (6, 7) im ersten Faltgelenk (2) um etwa 90°.

8. Drehbarer Heuwender nach den Ansprüchen 3 und 7, **dadurch gekennzeichnet, dass** nur die Zweiwegezylinder (22, 23) durch eine hydraulische Verbindung ausgelöst werden, und dass:
- zunächst der zweite Zweiwegezylinder (23) so angeordnet ist, dass er vollständig komprimiert wird;
- danach wird der erste Zweiwegezylinder (22) so angeordnet, dass er vollständig komprimiert wird, wenn der zweite Zweiwegezylinder (23) vollständig zusammengedrückt ist;
- und danach der Einwegzylinder (21) so angeordnet ist, dass er vollständig komprimiert und gestoppt wird, während der verlängerte Ruheabschnitt des Schwenksegments (17) über das Schwenkgelenk (10) in ständigem Kontakt mit der ersten Seitenkonsole (6) steht.

## Revendications

1. Faneuse rotative ayant un segment latéral (1) fixé de manière pivotante dans une première articulation pliable (2) à un cadre principal (3), le cadre principal (3) et le segment latéral (1) étant supportés par des roues de support (5) et le segment latéral (1) étant constitué de plusieurs supports latéraux (6, 7, 8, 9) qui sont fixés l'un à l'autre dans plusieurs autres articulations pliables (10, 11, 12),
un premier support latéral (6) étant fixé de manière pivotante au cadre principal (3) dans la première articulation pliable (2), un deuxième support latéral (7) étant fixé de manière pivotante au premier support latéral (6) dans une deuxième articulation pliable (10) et un troisième support latéral (8) étant fixé de manière pivotante au second support latéral (7) dans une troisième articulation pliable (11), chaque support latéral portant un rotor (13) avec des dents flexibles et tous les rotors (13) étant entraînés par une transmission (14) qui relie un tracteur, par l'intermédiaire d'un arbre de prise de force, à un entraînement sur le châssis principal (3) à travers les plusieurs supports latéraux (6, 7, 8, 9), et un mécanisme de levage (15) étant agencé entre le cadre principal (3) et un levier à ciseaux (19),
**caractérisée en ce que** le mécanisme de levage (15) est constitué d'un segment hydraulique (20) comprenant un vérin simple effet (21), qui est fixé de manière pivotante, par l'intermédiaire d'un piston, au niveau d'une première articulation pivotante (16) sur le cadre principal (3) et est relié à un premier vérin double effet (22) qui est fixé de manière pivotante à un segment pivotant (17) par l'intermédiaire d'un piston,
le segment pivotant (17) présentant une première articulation (25), une deuxième articulation (26) et une troisième articulation (24) et pouvant tourner dans la troisième articulation (24) sur le deuxième support latéral (7) et un deuxième vérin double effet (23) est fixé de manière pivotante au segment pivotant (17) et à une deuxième articulation pivotante (18) du levier à ciseaux (19), qui est monté sur les deuxième et troisième supports latéraux (7, 8).

2. Faneuse rotative selon la revendication 1 **caractérisée en ce que** le piston du premier vérin double effet (22) est fixé de manière pivotante dans la première articulation (25) et le piston sur le deuxième vérin double effet (23) est fixé de manière pivotante dans la deuxième articulation (26)

3. Faneuse rotative selon l'une quelconque des revendications précédentes **caractérisée en ce que** le segment pivotant (17) s'étend jusqu'à une partie de repos s'étendant sur la deuxième articulation pliable (10), où, dans certaines conditions, le segment pivotant repose sur le premier support latéral (6).

4. Faneuse rotative selon l'une quelconque des revendications précédentes, **caractérisée en ce que** le mécanisme de levage (15) en position de travail permet à chacune des roues de support (5) d'être en contact avec le terrain changeant (27) et permettant ainsi l'adaptation de rotors (13) avec les dents souples dans les plusieurs articulations pliables (10, 11, 12) et la première articulation pliable (2) et, dans ce cas, seul le vérin simple effet (21) est enclenché en fonction flottante, les vérins double effet (22, 23) étant complètement étendus et hors fonction et le segment pivotant (17) tournant librement dans la troisième articulation (24).

5. Faneuse rotative selon l'une quelconque des revendications précédentes, **caractérisée en ce que** le mécanisme de levage (15) permet le levage du segment latéral (1) de la position de travail à la position de non-travail de sorte que la roue de support (5) du premier support latéral (6) et les roues de support (5) des deuxième, troisième et quatrième supports (7, 8, 9) sont soulevées de la surface (27) et, dans ce cas, le vérin simple effet (21) est commuté de la position flottante à la position de levage et les vérins double effet (22, 23) sont complètement étendus et hors fonction.

6. Faneuse rotative selon la revendication 5, **caractérisée en ce que**, du fait du raccourcissement, le mécanisme de levage (15) entre les articulations pivotantes (16, 18) commence à soulever le segment latéral (1) en levant le segment pivotant (17) du deuxième support (7) dans la deuxième articulation pliable (10) et lorsque la partie de repos étendue du segment pivotant (17) repose sur le premier support latéral (6), qui permet le levage du premier support latéral (6) dans la première articulation pliable (2) jusqu'à ce que le vérin simple effet (21) soit complètement comprimé.

7. Faneuse rotative selon l'une quelconque des revendications précédentes **caractérisée en ce que** le mécanisme de levage (15), pour le repliage en position de transport à partir de la position de non-travail, permet le levage du segment latéral (1) dans des troisième et quatrième supports (8, 9) dans la troisième articulation pliable (11) d'environ 180°, suivi par le segment latéral (1) avec les premier et deuxième supports (6, 7) dans la première articulation pliable (2) d'environ 90°

8. Faneuse rotative selon les revendications 3 et 7, **caractérisée en ce que** seuls les vérins double effet (22, 23) sont déclenchés en raison d'une liaison hydraulique et **en ce que** :
- tout d'abord, le deuxième vérin double effet (23) est agencé pour être complètement comprimé ;
- ensuite, le premier vérin double effet (22) est conçu pour être complètement comprimé, une fois que le deuxième vérin double effet (23) est complètement comprimé ;
- puis le vérin simple effet (21) est conçu pour être complètement comprimé et arrêté, tandis que la partie de repos étendue du segment pivotant (17) est en contact constant avec le premier support latéral (6) à travers l'articulation pivotante (10).
